Europäisches Patentamt

European Patent Office

Office européen des brevets

(19)

(11) Publication number: **0 290 704**
**A2**

(12) # EUROPEAN PATENT APPLICATION

(21) Application number: **87810374.6**

(22) Date of filing: **29.06.87**

(51) Int. Cl.⁴: **C05G 1/00 , C05F 11/02 , A01C 1/06 , C05G 3/00**

(30) Priority: **12.05.87 CH 1799/87**

(43) Date of publication of application:
**17.11.88 Bulletin 88/46**

(84) Designated Contracting States:
**AT BE DE ES FR GB GR IT LU NL SE**

(71) Applicant: **Anlad N.V.**
**Handelsckade 8**
**Curaçao (Dutch Antilles)(AN)**

(72) Inventor: **Savoini, Guido**
**Via delle Scuole**
**CH-6906 Lugano(CH)**

(74) Representative: **Baggiolini, Raimondo et al**
**Racheli & Fiammenghi Via San Gottardo 15**
**CH-6900 Lugano(CH)**

(54) Formulation for agricultural use suitable for improving the nutritional activity and development of plants.

(57) A formulation for agricultural use is described, in particular to improve the nutritional activity and development of plants comprising a homogeneous mixture of 5-30% of potassium humate, 5-60% of iron humate, 5-40% of phosphorus humate and 5-50% of nitrogen humate, said percentages being by weight with respect to the weight of said formulation, said formulation being used in a weight ratio of 0.1-0.5%.

EP 0 290 704 A2

## Formulation for agricultural use suitable for improving the nutritional activity and development of plants

This invention relates to a formulation for agricultural use, in particular a formulation suitable for improving nutritional activity and development of plants or their propagation parts.

The use is known of nitrogen, phosphorus and potassium in varied forms and proportions, in mixtures among themselves and with trace elements, as main constitutents of fertilizers used to renew the endowment of the soil with such essential elements for the growth of plants.

A formulation has now been found based on salts of these essential chemical elements combined in critical proportions which added in small amounts to seeds, rhizomes or other propagative material of plants promotes their various metabolic or development activities in a surprising manner.

The formulation according to the invention in its most general form is characterized in that it comprises a homogeneous mixture of potassium humate, iron humate, phosphorus humate and nitrogen humate.

According to a preferred embodiment, the formulation under discussion comprises a homogeneous mixture of 5-30% of potassium humate, 5-60% of iron humate, 5-40% of phosphorus humate and 5-50% of nitrogen humate, said percentages being by weight with respect to the weight of said formulation, said formulation being used in a weight ratio of 0.1-0.5 with respect to the seeds or plants part to be treated.

It has been found that the formulation according to the invention, thanks to the joint presence of its components in the critical proportions indicated, achieves an unexpected synergetic effect giving an improvement of said activities of plants notably superior to that obtainable, for example, with part of its components or with mixtures of them in proportions different from the critical ones mentioned above.

Advantageously the formulation according to the invention is added during use to seeds or other reproductive bodies of the plants, in proportions that go from 0.1 to 0.5. The addition is made by mixing the formulation with other reproductive bodies or by spraying the formulation on them. For this purpose, besides in the concentrate form comprising said mixture as such, the formulation according to the invention can be diluted with a liquid or solid vehicle selected from water or bentonite which is used in a ratio of mixture/vehicle of 5-10.

Even though showing the properties of marked increase of nutritional and development activities of plants when the components of the formulation are used in the entire range of variations indicated above for them, it has been found that by mixing the components in certain specific proportions coming within the intervals of variations belonging to the formulation according to the invention, formulations with improved specific activities are obtained.

Thus, a formulation comprising from 5 to 15% by weight of potassium humate, from 15 to 25% by weight of iron humate, from 25 to 35% by weight of phosphorus humate and from 35 to 45% by weight of nitrogen humate, has proved to be particularly suitable as an activator of germination of plants in general and of gramineae.

For this purpose, a ratio between formulation and seeds from 0.1 to 0.5 is preferably used.

A formulation according to the invention comprising 15 to 25% by weight of potassium humate, 35 to 45% by weight of iron humate, 15 to 25% by weight of phosphorus humate and 15 to 25% by weight of nitrogen humate has proved particularly active for increasing the rhizogenic activity, for example, of vegetables. For this purpose, the formulation is used in a ratio of 0.2 to 1 with respect to the seeds to be treated.

According to another preferred embodiment of the invention the formulation comprises from 20 to 30% by weight of potassium humate, 50 to 60% by weight of iron humate, 1 to 10% by weight of phosphorus humate and 1 to 10% by weight of nitrogen humate and is particularly effective for increasing the micronutritional activity of the iron. In this case, an amount of the formulation of 0.5 to 2/kg of dry product is used per plant.

As an example of a further preferred embodiment of the formulation according to the invention, it comprises 1 to 10% by weight of potassium humate, 1 to 10% by weight of iron humate, 30 to 40% by weight of phosphorus humate and 40 to 50% by weight of nitrogen humate. This formulation has proved to be particularly advantageous in increasing the macronutritional activity of the nitrogen of plants with a long vegetative cycle when used in an amount of 2 to 6 quintals/hectare.

The formulation according to the invention is prepared in the form of a mixture all the more homogeneous by using the respective salts or their precursors as starting materials.

The following examples are given to illustrate some specific embodiments of the invention which will not be understood as limited to them but covers any variant or alternative coming within the scope of the invention as defined here.

## Example 1

A formulation is prepared containing:
10% by weight of potassium humate
20% by weight of iron humate
30% by weight of phosphorus humate and
40% by weight of nitrogen humate
by using as starting materials potassium humate, iron humate, phosphorus humate, nitrogen humate and by mixing them in the indicated proportions for a sufficient period to obtain a homogeneous mixture.

Tests made by using this formulation on corn seeds in a ratio of 0.1-1% illustrate an increase of germination activity that is 1.5 times greater than that of seeds not treated or treated with known fertilizing compositions such as potassium nitrate.

## Example 2

Proceeding as in example 1, a formulation is prepared containing:
20% by weight of potassium humate
40% by weight of iron humate
20% phosphorus humate, and
20% by weight of nitrogen humate
starting from raw materials comprising potassium humate/iron humate/phosphorus and nitrogen humates.

The formulation applied in an amount of 0.5% to corn brought an increase of rhizogenic activity 2 times greater with respect to that of untreated seeds.

## Example 3

A formulation was prepared comprising:
30% by weight of potassium humate
60% by weight of iron humate
5% by weight of phosphorus humate
5% by weight of nitrogen humate
by using as raw materials potassium humate/iron humate/phosphorus humate/nitrogen humate and by applying the method of example 1.

The application of this formulation to peaches in a ratio of 2 quintals/hectare led to an increase in micronutritional activity of 3 times.

## Example 4

Proceeding as in example 1 from constituents of the formulation, there is prepared a formulation comprising:
5% by weight of potassium humate
5% by weight of iron humate
40% by weight of phosphorus humate
50% by weight of nitrogen humate.

The formulation, when applied to wheat in a ratio of 3-5 quintals/hectare led to an increase of macronutritional activity of these plants of 2.5 times.

## Claims

1. Formulation for agricultural use, in particular to improve the nutritional activity and development of plants, characterized in that it comprises a homogeneous mixture of potassium humate, iron humate, phosphorus humate and nitrogen humate.

2. Formulation according to claim 1, wherein it comprises a homogeneous mixture of 5-30% of potassium humate, 5-60% iron humate, 5-40% phosphorus humate and 5-50% nitrogen humate, said percentages being by weight with respect to the weight of said formulation, said formulation being used in a weight ratio of 0.1-0.5% with respect to the seeds or parts of plants to be treated.

3. Formulation according to claims 1 and 2 used in concentrate form comprising said mixture as such.

4. Formulation according to claims 1 and 2 comprising said mixture and a vehicle for it selected from water/bentonite, in a mixture/vehicle ratio of 5-10.

5. Formulation according to claim 2 for use as germination activator comprising 5 to 15% by weight of potassium humate, 15 to 25% by weight of iron humate, 25 to 35% by weight of phosphorus humate and 35 to 45% by weight of nitrogen humate.

6. Formulation according to claim 5 which is used in a ratio of 0.1-0.5 kg/kg of seed to be treated.

7. Formulation according to claim 2 for use as an activator of the rhizogenic activity comprising 15 to 25% by weight of potassium humate, 35 to 45% by weight of iron hua/te, 15 to 25% by weight of phosphorus humate and 15 to 25% by weight of nitrogen humate.

8. Formulation according to claim 7 which is used in a ratio of 0.1-0.2 kg of seed.

9. Formulation according to claim 2 for use as an activator of micronutritional activity comprising 20 to 30% by weight of potassium humate, 50 to 60% by weight of iron humate, 1 to 10% by weight of phosphorus humate and 1 to 10% by weight of nitrogen humate.

10. Formulation according to claim 9 which is used in a ratio of 2-6 quintals/hectare or 2-6 kg/plant.

11. Formulation according to claim 2 for use as an activator of micronutritional activity comprising 1 to 10% by weight of potassium humate, 1 to 10% by weight of iron humate, 30 to 40% by weight of phosphorus humate and 40 to 50% by weight of nitrogen humate.

12. Formulation according to claim 11 which is used in a ratio of 3-5 quintals/hectare on gramineae.